# EUROPEAN PATENT APPLICATION

(11) **EP 2 733 375 A2**
(43) Date of publication of application: **21.05.2014**
(21) Application number: 13192459.9
(22) Date of filing: 12.11.2013
(51) Int. Cl.: F16D 13/75

(54) **Clutch device**

(30) Priority: 14.11.2012 JP 2012250156
(71) Applicant: AISIN SEIKI KABUSHIKI KAISHA, Kariya-shi, Aichi 448-8650 (JP)
(72) Inventor: Yamasaki, Shoichi, Kariya-shi, Aichi 448-8650 (JP)
(74) Representative: Kramer - Barske - Schmidtchen

(57) **Abstract**

A clutch device includes a wear compensating mechanism that adjusts an interval between a pressure plate and a pressing load adjusting mechanism to compensate a wear amount of a friction member, and a wear amount detecting and storing mechanism that detects and stores the wear amount of the friction member and allows an adjusting operation of the wear compensating mechanism, and that includes a sensor member that abuts on one or both of a flywheel and the wear compensating mechanism, a female screw member that is screwed with the sensor member with a predetermined clearance in an axial direction and is restrained from being moved in the axial direction by a member moving integrally with the pressure plate, an urging member that urges the sensor member towards the flywheel, and a rotating force generating member that generates a rotating force to move the female screw member towards the flywheel.

## Description

### TECHNICAL FIELD

The present invention relates to a clutch device including a wear compensating mechanism configured to compensate wear of a friction member of a clutch disc.

### BACKGROUND DISCUSSION

A vehicle is provided with a clutch device on a power transmission system path between an engine and a transmission so as not to transmit rotative power of the engine to the transmission at engine starting or at transmission shift. A clutch operating force is transmitted through a release mechanism such as a hydraulic mechanism and a link mechanism by a manual operation (for example, a stepping operation) of an operation mechanism such as a clutch lever and a clutch pedal, so that the clutch device can connect or disconnect the engine and the transmission. In general, the clutch device has a mechanism that presses a clutch disc, which transmits the rotative power to the transmission, to a flywheel, to which the rotative power of the engine is transmitted, by a pressure plate. The pressure plate is urged to the clutch disc by a diaphragm spring that can be operated by the release mechanism. The diaphragm spring is supported to a clutch cover fixed to the flywheel so that it can swing at a support point.

As a friction member (facing) provided on a friction surface of the clutch disk is worn, a posture of the diaphragm spring is changed. Therefore, when the friction member is worn, an operating force necessary to set the clutch device to a non-engaged state, i.e., a load to be applied to the clutch cover is increased. For this reason, a mechanism for compensating (following) the wear of the friction member is provided.

For example, a wear following clutch device disclosed in JP-A-11-336789 is provided with a support member that is provided on the other surface of the pressure plate and supports an outer periphery-side of the diaphragm spring, a restraint mechanism that is attached to the pressure plate and restrains a moving amount of the support member moving depending on a wear amount of the friction member in the axial direction, an adjusting mechanism that can adjust axial relative positions of the restraint mechanism and the support member, and a support point moving mechanism that enables the support member to protrude towards the diaphragm spring by the moving amount restrained by the restraint mechanism.

The restraint mechanism has a restraint member, a sensor plate, and a restraint auxiliary member. When the restraint member is moved upwards in the axial direction, a side surface of the sensor plate is pressed to an inner periphery of a hole of the pressure plate by a wedge operation between a tapered surface of the restraint member and an inclined surface of the restraint auxiliary member, so that the restraint member is restrained from being moved upwards in the axial direction.

### SUMMARY

The following analysis is provided by the inventor.

According to the restraint mechanism of the wear following clutch device disclosed in JP-A-11-336789, since the restraint member is formed with the tapered surface, and the restraint auxiliary member is formed with the inclined surface so as to secure the wedge operation, the cost is increased for the processing to the special shape. Also, the restraint mechanism of the wear following clutch device disclosed in JP-A-11-336789 has a structure where it depends on an indefinite elements, i.e., the friction coefficient for a frictional force caused when the side surface of the sensor plate is pressed to the inner periphery of the hole of the pressure plate. Hence, it may become necessary set a strict condition for satisfying performance of the restraint mechanism.

A need thus exists for a clutch device having a wear compensating mechanism capable of securing high reliability while suppressing manufacturing cost.

According to an aspect of the present invention, there is provided a clutch device comprising: a pressure plate that presses a friction member of a clutch disc towards a flywheel; a pressing load adjusting mechanism that adjusts a pressing load to the pressure plate by using a spring force; a wear compensating mechanism that adjusts an interval between the pressure plate and the pressing load adjusting mechanism to compensate a wear amount of the friction member; and a wear amount detecting and storing mechanism that detects and stores the wear amount of the friction member and allows an adjusting operation of the wear compensating mechanism based on the stored wear amount, wherein the wear amount detecting and storing mechanism comprises: a sensor member that can abut on one or both of the flywheel and the wear compensating mechanism from a side of the pressing load adjusting mechanism; a female screw member that is screwed with the sensor member with a predetermined clearance in an axial direction and is restrained from being moved in the axial direction by a member moving integrally with the pressure plate; an urging member that urges the sensor member towards the flywheel; and a rotating force generating member that generates a rotating force to move the female screw member towards the flywheel.

The above clutch device may further comprise a clutch cover that is fixed to the flywheel, and the pressing load adjusting mechanism may comprise a release plate that can press the wear compensating mechanism towards the flywheel, and an elastic member that is supported to the clutch cover and urges the release plate towards the wear compensating mechanism.

In the above clutch device, the sensor member may comprise a part that abuts on the elastic member.

The above clutch device may further comprise a clutch cover that is fixed to the flywheel, and the pressing load adjusting mechanism may comprise a diaphragm spring that comprises a plurality of lever parts extending diametrically inwards from an annular disc spring part and can urge the wear compensating mechanism towards the flywheel by the disc spring part, and a support point member that is supported to the clutch cover and becomes a support point of swinging of the lever parts of the diaphragm spring.

In the above clutch device, the wear compensating mechanism may comprise a lower wedge that comprises a plurality of inclined surfaces at a side of the pressing load adjusting mechanism; an upper wedge that comprises another plurality of inclined surfaces corresponding to the plurality of inclined surfaces at a side of the lower wedge and is movable in the axial direction as the upper wedge is rotated in a circumferential direction with respect to the lower wedge; and an elastic member that urges the upper wedge in the circumferential direction with respect to the lower wedge.

In the above clutch device, the lower wedge may comprise a part functioning as the wear amount detecting and storing mechanism, and the part functioning as the wear amount detecting and storing mechanism may comprise a support part supporting the urging member, and a hole portion for inserting therein the sensor member. The clutch device may further comprise a case that comprises a hole portion for inserting therein the sensor member and is fixed to the lower wedge to cover a part of the sensor member, the female screw member, and the rotating force generating member. The rotating force generating member may be supported to the lower wedge or the case.

In the above clutch device, the pressure plate may comprise a part functioning as the wear amount detecting and storing mechanism, and the part functioning as the wear amount detecting and storing mechanism may comprise a support part supporting the urging member, a hole portion for inserting therein the sensor member, and a recess portion for accommodating therein a part of the sensor member, the female screw member and the rotating force generating member. The clutch device may further comprise a cover member that comprises a hole portion for inserting therein the sensor member and is fixed to the pressure plate to cover the recess portion. The rotating force generating member may be supported to the pressure plate.

The above clutch device may further comprise a sliding member that is arranged at a periphery of the sensor member and adjacent to the female screw member at one side or both sides in the axial direction.

In the above clutch device, the clutch disc may comprise a seat spring in the friction member.

The above clutch device may further comprise a cushion spring that is arranged between the wear compensating mechanism and the pressure plate.

According to the above configuration, since the number of parts configuring the wear amount detecting and storing mechanism is small and it is not necessary to use a special material, it is possible to implement the wear amount detecting and storing function at low cost as compared to the conventional configuration. Also, since the operation of the wear compensating mechanism is restrained by the urging force of the urging member on the sensor member, the degree of design freedom is high, the indefinite element such as friction force is small and the high reliability can be thus secured as compared to the conventional configuration. Further, since the degree of design freedom of the elastic member is high, it is possible to apply an urging force large enough to endure vibrations, thereby securing high vibration resistance as compared to the conventional configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a partially cut plan view schematically showing a configuration of a clutch device according to a first illustrative embodiment of the invention, which is seen from an axial direction;
Fig. 2 is a sectional view taken along a line X-X' of Fig. 1, which schematically shows the configuration of the clutch device according to the first illustrative embodiment of the invention;
Fig. 3 is a sectional view taken along a line Y-Y' of Fig. 1, which schematically shows the configuration of the clutch device according to the first illustrative embodiment of the invention;
Figs. 4A and 4B are partially sectional views schematically showing an operation of the clutch device according to the first illustrative embodiment of the invention, in which Fig. 4A shows a state before a friction member of a clutch disc is worn, and Fig. 4B shows a moment at which the friction member of the clutch disc is worn;
Figs. 5A and 5B are partially sectional view following Figs. 4A and 4B schematically showing an operation of the clutch device according to the first illustrative embodiment of the invention, in which Fig. 5A shows a state where a wear amount of the friction member of the clutch disc is stored, and Fig. 5B shows a state where the wear is compensated based on the stored wear amount;
Fig. 6 is a sectional view schematically showing a configuration of a clutch device according to a second illustrative embodiment of the invention;
Fig. 7 is a sectional view schematically showing a configuration of a clutch device according to a third illustrative embodiment of the invention;
Fig. 8 is a sectional view schematically showing a configuration of a clutch device according to a fourth illustrative embodiment of the invention;
Fig. 9 is a partially cut plan view schematically showing a configuration of a clutch device according to a fifth illustrative embodiment of the invention, which is seen from an axial direction.
Fig. 10 is a sectional view taken along a line X-X' of Fig. 9, which schematically shows the configuration of the clutch device according to the fifth illustrative embodiment of the invention;
Fig. 11 is a sectional view taken along a line Y-Y' of Fig. 9, which schematically shows the configuration of the clutch device according to the fifth illustrative embodiment of the invention;
Fig. 12 is a sectional view following Fig. 10 schematically showing an operation of the clutch device according to the fifth illustrative embodiment of the invention, which shows a moment at which the friction member of the clutch disc is worn;
Fig. 13 is a sectional view following Fig. 12 schematically showing an operation of the clutch device according to the fifth illustrative embodiment of the invention, which shows a moment at which a release plate is lifted up; and
Fig. 14 is a sectional view following Fig. 13 schematically showing the operation of the clutch device according to the fifth illustrative embodiment of the invention, which shows a state where the wear is compensated based on the stored wear amount.

### DETAILED DESCRIPTION

### [Outline of Illustrative Embodiments]

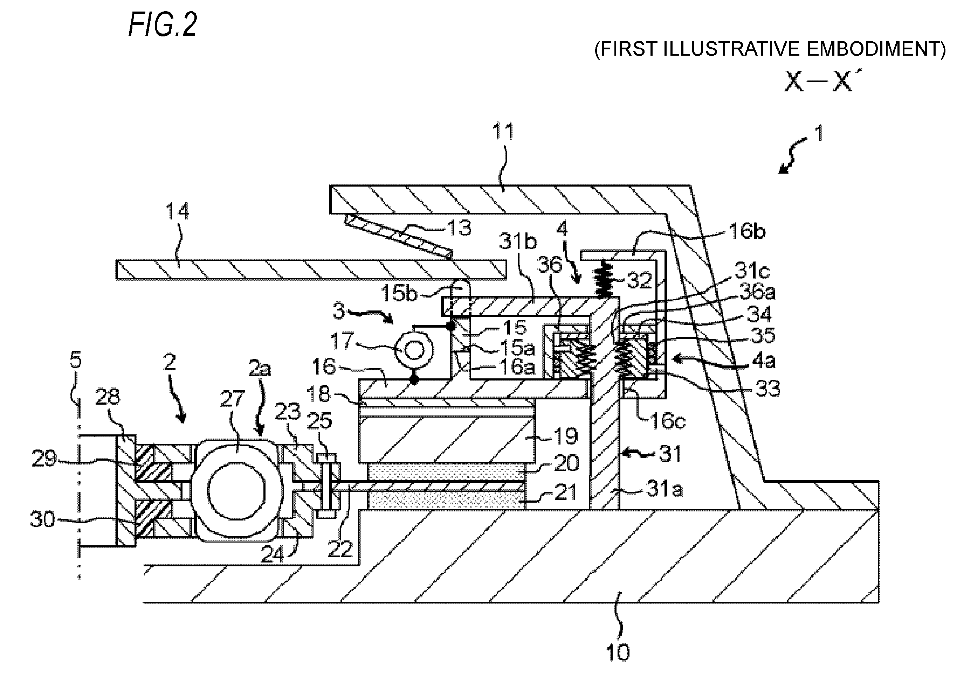

A clutch device according to an illustrative embodiment of the invention includes: a pressure plate (19 in Fig. 2) that presses a friction member of a clutch disc (2 in Fig. 2) towards a flywheel (10 in Fig. 2); a pressing load adjusting mechanism (13 and 14 in Fig. 2) that adjusts a pressing load to the pressure plate by using a spring force; a wear compensating mechanism (3 in Fig. 2) that adjusts an interval between the pressure plate and the pressing load adjusting mechanism to compensate a wear amount of the friction member; and a wear amount detecting and storing mechanism (4 in Fig. 2) that detects and stores the wear amount of the friction member and allows an adjusting operation of the wear compensating mechanism based on the stored wear amount. The wear amount detecting and storing mechanism includes: a sensor member (31 in Fig. 2) that can abut on one or both of the flywheel and the wear compensating mechanism from a side of the pressing load adjusting mechanism; a female screw member (33 in Fig. 2) that is screwed with the sensor member with a predetermined clearance in an axial direction and is restrained from being moved in the axial direction by a member (16 and 36 in Fig. 2) moving integrally with the pressure plate; an urging member (32 in Fig. 2) that urges the sensor member towards the flywheel; and a rotating force generating member (35 in Fig. 2) that generates a rotating force to move the female screw member towards the flywheel.

Incidentally, in the specification, the reference numerals are used just to easily understand the elements indicated by the reference numerals and are not intended to limit the elements to the shown types. Hereinafter, the illustrative embodiments are described with reference to the drawings.

### [First Illustrative Embodiment]

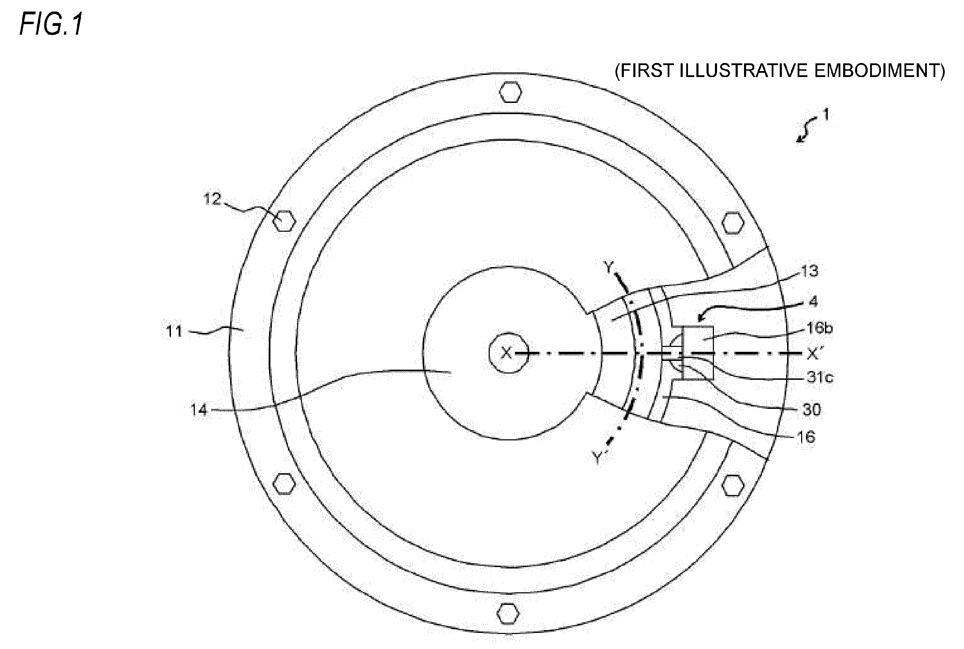

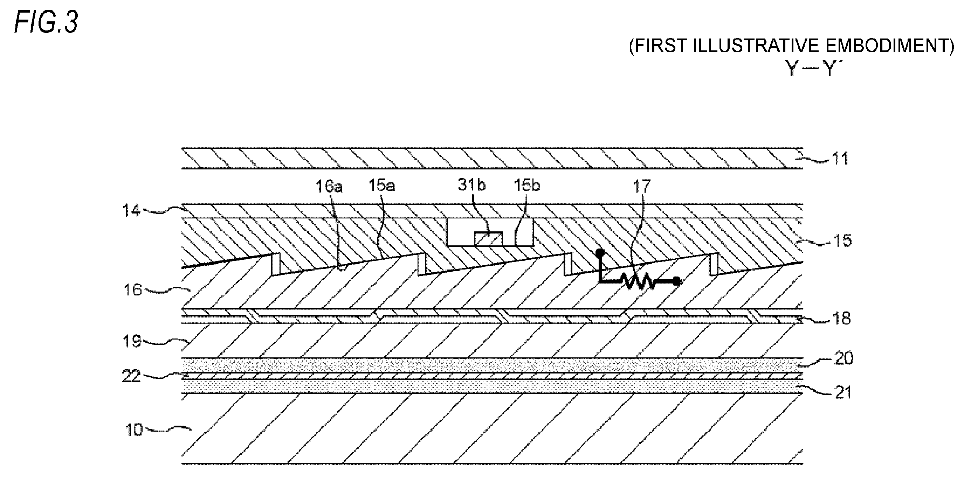

A clutch device according to a first illustrative embodiment of the invention is described with reference to the drawings. Fig. 1 is a partially cut plan view schematically showing a configuration of the clutch device according to the first illustrative embodiment of the invention, which is seen from an axial direction. Fig. 2 is a sectional view taken along a line X-X' of Fig. 1, which schematically shows the configuration of the clutch device according to the first illustrative embodiment of the invention. Fig. 3 is a sectional view taken along a line Y-Y' of Fig. 1, which schematically shows the configuration of the clutch device according to the first illustrative embodiment of the invention.

The clutch device 1 is a device (refer to Figs. 1 and 2) that enables interruption(disconnection)/connection of transmission of rotative power from an engine (not shown) to a transmission (not shown). The clutch device 1 can be operated by a release device (for example, a lever mechanism, a hydraulic piston mechanism, an actuator and the like) that moves a release plate 14 towards the transmission-side (the upper side in Fig. 2) in the axial direction to thus interrupt the rotative power from the engine to the transmission. The clutch device 1 has a configuration where an elastic member 13, the release plate 14, an upper wedge 15, a lower wedge 16, a cushion spring 18, a pressure plate 19 and a clutch disc 2 are stacked between a clutch cover 11 and a flywheel 10.

The clutch device 1 has a wear compensating mechanism 3 compensating wear amounts of friction members 20, 21 of the clutch disc 2 so as to suppress a change in an operating force resulting from a change of a posture of the elastic member 13, which is caused as the friction members 20, 21 of the clutch disc 2 are worn. Also, the clutch device 1 has a wear amount detecting and storing mechanism 4 that detects and stores wear amounts of the friction members 20, 21 of the clutch disc 2 and allows an operation of the wear compensating mechanism 3 as an amount corresponding to the stored wear amounts so as to secure an appropriate operation (to restrain an excessive operation) of the wear compensating mechanism 3.

The wear compensating mechanism 3 has a function of adjusting an interval (an interval in a direction of a rotary shaft 5) between the pressure plate 19 and the release plate 14 to thereby compensate the wear amounts of the friction members 20, 21 of the clutch disc 2 (refer to Fig. 2). The wear compensating mechanism 3 has a configuration where the cushion spring 18, the lower wedge 16 and the upper wedge 15 are sequentially stacked from the pressure plate 19 between the pressure plate 19 and the release plate 14.

The wear compensating mechanism 3 has a configuration where the lower wedge 16 and the upper wedge 15 are engaged so that the upper wedge 15 is rotated in one circumferential direction with respect to the lower wedge 16 and a length (a length in a direction of the rotary shaft 5) from an abutting surface of the pressure plate 19 and the friction member 20 to an abutting part of the release plate 14 and the upper wedge 15 is thus increased. The wear compensating mechanism 3 has a configuration where the abutting surface of the lower wedge 16 on the upper wedge 15 is provided with a plurality of inclined surfaces 16a having a saw blade shape, which changes in one axial direction accompanied by a change in one circumferential direction, the upper wedge 15 is provided with a plurality of inclined surfaces 15a having a saw blade shape corresponding to the inclined surfaces 16a of the lower wedge 16, and a length from the abutting surface of the pressure plate 19 and the friction member 20 to the abutting part of the release plate 14 and the upper wedge 15 is adjusted using a slidable engaging between the inclined surfaces 16a, 15a. In the meantime, the wear compensating mechanism 3 may have a configuration where the length is adjusted by rotating the upper wedge 15 in one circumferential direction with respect to the lower wedge 16 with a screw engaging between the lower wedge 16 and the upper wedge 15, in addition to the slidable engaging between the inclined surfaces 16a, 15a. Also, the lower wedge 16 and the upper wedge 15 may be arc-shaped members that are divided in the circumferential direction or may be linear members that are arranged to relatively move in a tangential direction abutting in the circumferential direction.

The wear compensating mechanism 3 has a configuration where when a gap (a backlash in the direction of the rotary shaft 5) is formed between a notched part 15b of the upper wedge 15 and a stopper part 31b of a sensor member 31 of the wear amount detecting and storing mechanism 4 due to the wear of the friction members 20, 21 of the clutch disc 2, the upper wedge 15 is urged in one circumferential direction with respect to the lower wedge 16 by an elastic member 17 so as to reduce the gap. The wear compensating mechanism 3 reduces the gap between the notched part 15b of the upper wedge 15 and the stopper part 31b of the sensor member 31 of the wear amount detecting and storing mechanism 4 by movement of the release plate 14 in one axial direction (the upper side in Fig. 2), thereby adjusting the length. In the meantime, the detailed configurations and operations of the wear compensating mechanism 3 will be described later.

The wear amount detecting and storing mechanism 4 has a function of detecting displacement of the upper wedge 15 relative to the sensor member 31 corresponding to the wear amounts of the friction members 20, 21 of the clutch disc 2 (refer to Figs. 1 and 2). The wear amount detecting and storing mechanism 4 has a function of storing (fixing) relative positions of the sensor member 31 and the lower wedge 16 by operating a screw mechanism 4a at a state where the sensor member 31 and the lower wedge 16 are displaced. The wear amount detecting and storing mechanism 4 has a function of allowing the wear compensating mechanism 3 to operate by an amount (which corresponds to the wear amounts of the friction members 20, 21) of the gap formed between the stopper part 31b of the sensor member 31 and the notched part 15b of the upper wedge 15 of the wear compensating mechanism 3 at a state where the relative positions of the sensor member 31 and the lower wedge 16 are stored. In the meantime, the detailed configurations and operations of the wear amount detecting and storing mechanism 4 will be described later.

The clutch device 1 has, as main configuration parts, the flywheel 10, the clutch cover 11, bolts 12, the elastic member 13, the release plate 14, the upper wedge 15, the lower wedge 16, the elastic member 17, the cushion spring 18, the pressure plate 19, the sensor member 31, the urging member 32, the female screw member 33, a sliding member 34, a rotating force generating member 35, a case 36 and the clutch disc 2.

The flywheel 10 is an annular inertia member to which the rotative power of the power source (for example, the engine) is transmitted (refer to Figs. 2 and 3). The clutch cover 11 is attached and fixed to an outer peripheral part of the flywheel 10 by the bolts 12. The flywheel 10 is rotated integrally with the clutch cover 11.

The clutch cover 11 is an annular member that is formed to cover an outer peripheral part of the clutch disc 2 (refer to Figs. 1 to 3). The clutch cover 11 is attached and fixed to the flywheel 10 at the outer peripheral part thereof by the bolts 12 and is rotated integrally with the flywheel 10. The clutch cover 11 is spaced from the flywheel 10 at an inner peripheral part thereof and covers the outer peripheral part of the clutch disc 2. The clutch cover 11 supports an inner peripheral end portion of the elastic member 13 at the inner peripheral part thereof.

The elastic member 13 is an annular member having elasticity urging the release plate 14 towards the flywheel 10, and is a configuration part of the pressing load adjusting mechanism that adjusts a pressing load to the pressure plate 19 by using the spring force (refer to Figs. 1 and 2). As the elastic member 13, a disc spring, a plate spring, a coil spring and the like may be used, for example. The elastic member 13 is supported at an inner periphery end portion thereof to the clutch cover 11 and is press-contacted at an outer periphery end portion thereof to the release plate 14. A force with which the elastic member 13 presses the release plate 14 towards the flywheel 10 is a force of pushing down the clutch disc 2 towards the flywheel 10 through the upper wedge 15, the lower wedge 16, the cushion spring 18 and the pressure plate 19. A pressing load with which the elastic member 13 presses the release plate 14 towards the flywheel 10 is partially or entirely cancelled by applying a force of the transmission-side (the upper side in Fig. 2) to the release plate 14, so that the load to be transmitted to the pressure plate 19 is reduced. As a result, the force with which the pressure plate 19 presses the clutch disc 2 is reduced and transmission torque of the rotative power from the flywheel 10 to the clutch disc 2 can be adjusted. That is, the elastic member 13 is a configuration part of the pressing load adjusting mechanism that adjusts the pressing load to the pressure plate 19.

The release plate 14 is an annular and plate-shaped member that is arranged between the elastic member 13 and the upper wedge 15, and is a configuration part of the pressing load adjusting mechanism (refer to Figs. 1 to 3). The release plate 14 is operated at an inner peripheral part thereof so that it is moveable in the direction of the rotary shaft 5 by a release apparatus (not shown). The release plate 14 abuts on the upper wedge 15 to be connected/separated at an outer peripheral part thereof. The release plate 14 is pressed towards the flywheel 10 (the lower side in Fig. 2) by the elastic member 13. The release plate 14 transmits a pressing load, which corresponds to a load obtained by canceling the force applied to the transmission-side (the upper side in Fig. 2) by the release apparatus (not shown) from the pressing force of the elastic member 13, to the pressure plate 19 through the upper wedge 15, the lower wedge 16 and the cushion spring 18. That is, the release plate 14 is a configuration part of the pressing load adjusting mechanism that adjusts the pressing load to the pressure plate 19.

The upper wedge 15 is an annular member that is arranged between the release plate 14 and the lower wedge 16, and is a configuration part of the wear compensating mechanism 3 (refer to Figs. 2 and 3). The upper wedge 15 abuts on the release plate 14 to be connected/separated at an end portion of the transmission-side (the upper in Fig. 3) and is applied with the pressing load from the release plate 14. The upper wedge 15 is formed with the plurality of inclined surfaces 15a on an end face thereof at a side of the lower wedge 16 (the lower side in Fig. 3). The inclined surface 15a is an inclined surface that changes in one axial direction accompanied by a change in one circumferential direction, and corresponds to the inclined surface 16a of the lower wedge 16. The inclined surface 15a is slidably engaged with the inclined surface 16a of the lower wedge 16. Thereby, when the upper wedge 15 is rotated in one circumferential direction with respect to the lower wedge 16, the upper wedge 15 can be displaced to separate from the lower wedge 16. One end of the elastic member 17 is swingably connected to the upper wedge 15 and the upper wedge 15 is urged in one circumferential direction by the elastic member 17.

The upper wedge 15 has the notched part 15b that is notched from an end face of the transmission-side (the upper side in Fig. 3) towards the lower wedge 16 (the lower side in Fig. 3). The notched part 15b abuts on the stopper part 31b of the sensor member 31 of the wear amount detecting and storing mechanism 4 at a part of the end face of the transmission-side (the upper side in Fig. 3) so that it can be connected/separated in the axial direction, and restrains the upper wedge 15 from being separated and displaced from the lower wedge 16 by the stopper part 31b. Wall surfaces of both sides of the notched part 15b in the circumferential direction are arranged at a predetermined interval so that the upper wedge 15 does not interfere with the stopper part 31b even when the upper wedge 15 is circumferentially rotated by a predetermined angle.

The upper wedge 15 is rotated in the one circumferential direction by the elastic member 17 so that, when a gap (backlash) is formed between the notched part 15b and the stopper part 31b and a gap (backlash) is formed between the end face of the transmission-side (the upper side in Fig. 3) of the upper wedge 15 and the release plate 14 in the axial direction, the gaps (the gap between the notched part 15b and the stopper part 31b and the gap between the upper wedge 15 and the release plate 14) are reduced.

The lower wedge 16 is an annular member that is arranged between the upper wedge 15 and the cushion spring 18, and is a configuration part of the wear compensating mechanism 3 and the wear amount detecting and storing mechanism 4 (refer to Figs. 1 to 3). The lower wedge 16 abuts on (or may be fixed or non-rotatably engaged to) the cushion spring 18 at a side of the pressure plate 19 (the lower side in Fig. 2) of the annular plate part. The lower wedge 16 is urged in a direction of getting away from the pressure plate 19 by the cushion spring 18 at a state where the cushion spring 18 is compressed in the axial direction.

The lower wedge 16 is formed with the plurality of inclined surfaces 16a on an end face of a part protruding from the annular plate part towards the upper wedge 15 (the upper side in Fig. 2) at a part functioning as the wear compensating mechanism 3. The inclined surface 16a is an inclined surface that changes in one axial direction accompanied by a change in one circumferential direction, and corresponds to the inclined surface 15a of the upper wedge 15. The inclined surface 16a is slidably engaged with the inclined surface 15a of the upper wedge 15. Thereby, when the upper wedge 15 is rotated in one circumferential direction with respect to the lower wedge 16, the upper wedge 15 can be displaced to separate from the lower wedge 16. The other end of the elastic member 17 is swingably connected to the lower wedge 16, and the lower wedge 16 is urged in the other circumferential direction by the elastic member 17.

The lower wedge 16 has a support part 16b and a hole portion 16c at a part functioning as the wear amount detecting and storing mechanism 4. The support part 16b protrudes from an outer peripheral part of the annular plate part of the lower wedge 16 towards the transmission-side (the upper side in Fig. 2) and a tip end thereof protrudes diametrically inwards. The support part 16b supports one end of the urging member 32 that urges the sensor member 31 towards the engine-side (the lower side in Fig. 2). The hole portion 16c is a through-hole that is formed at the annular plate part of the lower wedge 16. A pin part 31a of the sensor member 31 is inserted into the hole portion 16c. The lower wedge 16 restrains the female screw member 33 from moving towards the flywheel 10 (the lower side in Fig. 2) in the axial direction. The lower wedge 16 supports (or may fix or engage) the other end of the rotating force generating member 35 that generates a rotating force (an urging force in the rotating direction) of the female screw member 33. The case 36 that accommodates therein the sliding member 34, the female screw member 33 and the rotating force generating member 35 is fixed to the lower wedge 16.

The elastic member 17 is a member that urges the upper wedge 15 in one circumferential direction with respect to the lower wedge 16, and is a configuration part of the wear compensating mechanism 3 (refer to Figs. 2 and 3). As the elastic member 17, a coil spring, a plate spring and the like may be used, for example. The elastic member 17 has one end that is swingably connected (fixed) to the lower wedge 16 and the other end that is swingably connected (fixed) to the upper wedge 15, and is extended to be longer than a free length so that a compression force is generated.

The cushion spring 18 is an elastic member that is arranged between the lower wedge 16 and the pressure plate 19 (refer to Figs. 2 and 3). As the cushion spring 18, a wave spring, a seat spring, a disc spring and the like may be used, for example. When the cushion spring 18 is sandwiched and compressed between the lower wedge 16 and the pressure plate 19, the cushion spring 18 urges the pressure plate 19 so that the pressure plate 19 is separated from the lower wedge 16. The cushion spring 18 may be fixed (engaged) to one or both of the lower wedge 16 and the pressure plate 19.

The pressure plate 19 is an annular plate that presses a friction sliding part of the clutch disc 2 to the flywheel 10 (refer to Figs. 2 and 3). The pressure plate 19 has a surface of the engine-side (the lower side in Fig. 2) that is a friction surface friction-sliding with the friction member 20 of the clutch disc 2. The pressure plate 19 has a surface of the transmission-side (the upper side in Fig. 2) that abuts on (or may be fixed or non-rotatably engaged to) the cushion spring 18. When the cushion spring 18 is compressed in the axial direction, the pressure plate 19 is urged by the cushion spring 18 in a direction of getting away from the lower wedge 16. Also, the pressure plate 19 is urged towards the flywheel 10 through the release plate 14, the upper wedge 15, the lower wedge 16 and the cushion spring 18 by the elastic member 13.

The sensor member 31 is a member that detects a displacement of the lower wedge 16 relative to the sensor member 31, which corresponds to the wear amounts of the friction members 20, 21 of the clutch disc 2, and is a configuration part of the wear amount detecting and storing mechanism 4 (including the screw mechanism 4a) (refer to Figs. 1 to 3). The sensor member 31 is configured to abut on one or both of the flywheel 10 and the wear compensating mechanism 3 (the upper wedge 15) from a side of the pressing load adjusting mechanism (the release plate 14). The sensor member 31 is urged towards the flywheel 10 (the lower side in Fig. 2) in the axial direction by the urging member 32. The sensor member 31 has the pin part 31a extending in the axial direction. The pin part 31a is inserted into a hole portion 36a of the case 36 and the hole portion 16c of the lower wedge 16. The pin part 31a abuts on the flywheel 10 to be connected/separated at a tip end portion at the side of the flywheel 10 (the lower side in Fig. 2) in the axial direction. In this case, the flywheel 10 and the clutch cover 11 may be integrated and the pin part 31a may abut on a part of an inner wall of the clutch cover 11, which is integrated with the flywheel 10, to be connected/separated. The pin part 31a has a male screw part 31c at a part between the hole portion 36a and the hole portion 16c. The male screw part 31c is screwed with the female screw member 33 with a predetermined clearance (backlash, gap) at least in the axial direction. The pin part 31a has the stopper part 31b that extends diametrically inwards from a part of the transmission-side (the upper side in Fig. 2) in the axial direction. The stopper part 31b abuts on a part of an end face of the transmission-side (the upper side in Fig. 3) of the notched part 15b of the upper wedge 15 to be connected/separated, thereby restraining the upper wedge 15 from being separated and displaced from the lower wedge 16. The stopper part 31b is arranged at a predetermined interval from both wall surfaces of the notched part 15b in the circumferential direction so that it does not interfere with both surfaces even when the upper wedge 15 is rotated in the circumferential direction by a predetermined angle.

The urging member 32 is a member that urges the sensor member 31 towards the flywheel 10 (the lower side in Fig. 2) in the axial direction, and is a configuration part of the wear amount detecting and storing mechanism 4 (refer to Fig. 2). As the urging member 32, a coil spring, a disc spring, a plate spring and the like may be used, for example. The urging member 32 has one end that is supported (or may be fixed) to the support part 16b of the lower wedge 16 and the other end that abuts on the sensor member 31, and is compressed to press the sensor member 31 to the flywheel 10. By the urging member 32, the movement of the upper wedge 15 towards the transmission-side (the upper side in Fig. 2), which is caused due to the load of the elastic member 17 of the wear compensating mechanism 3, is suppressed through the sensor member 31.

The female screw member 33 is a member that stores (fixes) the relative positions of the sensor member 31 and the lower wedge 16 varied due to the wear of the friction members 20, 21, and is a configuration part of the wear amount detecting and storing mechanism 4 (including the screw mechanism 4a) (refer to Figs. 1 to 3). As the female screw member 33, a nut may be used, for example. The female screw member 33 is restrained from moving in the axial direction by the member (here, the lower wedge 16 and the case 36) moving integrally with the pressure plate 19. The female screw member 33 is rotatably accommodated in a space surrounded by the lower wedge 16 and the case 36 and is accommodated together with a part of the sensor member 31, the sliding member 34 and the rotating force generating member 35. The female screw member 33 slidably abuts on the lower wedge 16 and the sliding member 34. The female screw member 33 may move in the axial direction between the lower wedge 16 and the sliding member 34 with a slight rattling in the axial direction. The female screw member 33 is screwed with the male screw part 31c of the sensor member 31 with a predetermined clearance (backlash, gap) at least in the axial direction. The female screw member 33 is rotated in one direction about the male screw part 31c serving as an axis and is thus moved towards the flywheel 10 (the lower side in Fig. 2). The female screw member 33 may be fixed (or engaged) to one end of the rotating force generating member 35 and is urged to rotate in one direction about the male screw part 31c serving as an axis by the rotating force generating member 35.

The sliding member 34 is an annular member that is arranged between the case 36 and the female screw member 33 (or axially between the lower wedge 16 and the female screw member 33) in the axial direction, and is a configuration part of the wear amount detecting and storing mechanism 4 (refer to Fig. 2). As the sliding member 34, a washer may be used, for example. The sliding member 34 is rotatably accommodated in the space surrounded by the lower wedge 16 and the case 36 and is accommodated together with the part of the sensor member 31, the female screw member 33 and the rotating force generating member 35. The pin part 31a of the sensor member 31 is inserted into an inner periphery of the sliding member 34. The sliding member 34 can slide relative to the female screw member 33, which can rotate in one direction about the male screw part 31c serving as an axis, and the case 36. The sliding member 34 may move between the case 36 and the female screw member 33 in the axial direction with an axially slight rattling.

The rotating force generating member 35 is a member that generates a rotating force for rotating the female screw member 33 in one direction, and is a configuration part of the wear amount detecting and storing mechanism 4 (refer to Fig. 2). As the rotating force generating member 35, a torsion spring may be used, for example. The rotating force generating member 35 is accommodated in the space surrounded by the lower wedge 16 and the case 36 together with the part of the sensor member 31, the female screw member 33 and the sliding member 34. The rotating force generating member 35 has one end that is fixed (or may be engaged) to the female screw member 33 and the other end that is supported (or may be fixed or engaged) to the support part 16b of the lower wedge 16 (or the case 36), and is extended to be longer than a free length so as to generate rotating torque enabling the female screw member 33 screwed with the male screw part 31c of the sensor member 31 to be moved towards the flywheel 10 (the lower side in Fig. 2).

The case 36 is a member that covers the part of the sensor member 31, the female screw member 33, the sliding member 34 and the rotating force generating member 35, and is a configuration part of the wear amount detecting and storing mechanism 4 (refer to Figs. 1 and 2). The case 36 is fixed to the lower wedge 16. The case 36 has the hole portion 36a for inserting therein the pin part 31a of the sensor member 31. The case 36 restrains the female screw member 33 and the sliding member 34 from moving towards the transmission-side (the upper side in Fig. 2) in the axial direction. In the meantime, the case 36 may be integrated with the lower wedge 16.

The clutch disc 2 is a circular and disc-shaped assembly that is arranged between the flywheel 10 and the pressure plate 19 (refer to Figs. 2 and 3). The clutch disc 2 has the friction sliding part having the friction members 20, 21 attached and fixed (for example, crimping by a rivet, adhesion and the like) to both surfaces of a lining plate 22 at an outer peripheral part thereof and is sandwiched at the friction sliding part between the flywheel 10 and the pressure plate 19. The clutch disc 2 is attached and fixed to side plates 23, 24 at an inner peripheral part of the lining plate 22 by a plurality of rivets 25 and has a hub member 28, which is arranged between the side plates 23, 24, and a damper part 2a that buffers (absorbs) torsion (torque variation) between the side plates 23, 24 and the hub member 28 by an elastic force of an elastic member 27. The clutch disc 2 has a thrust member 29 that is arranged between the side plate 23 and the hub member 28, and a thrust member 30 that is arranged between the side plate 24 and the hub member 28. The clutch disc 2 is non-rotatably and axially-movably spline-engaged to an input shaft (not shown) of the transmission (not shown) on an inner periphery of the hub member 28.

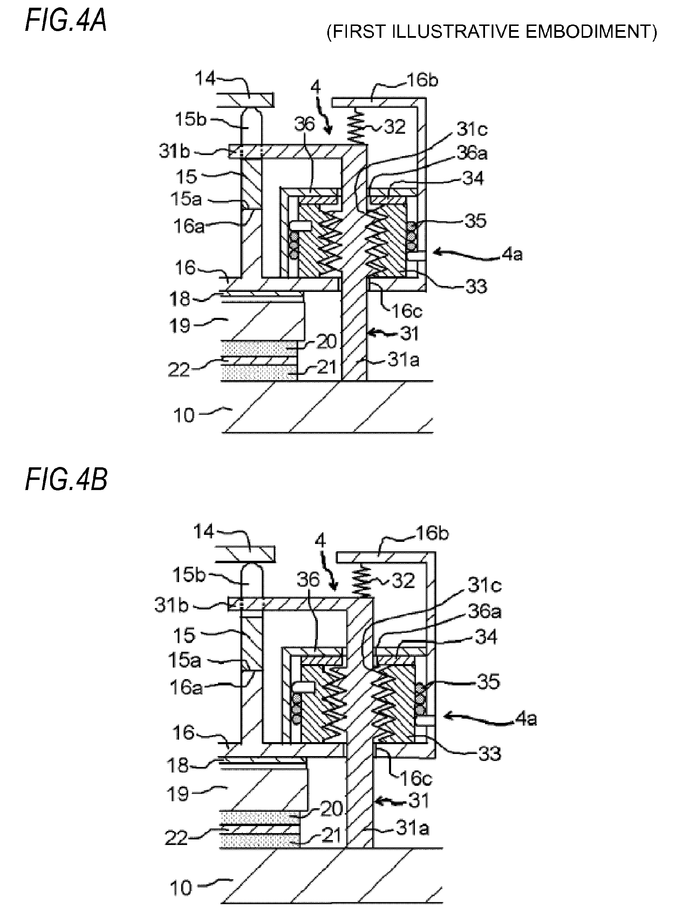

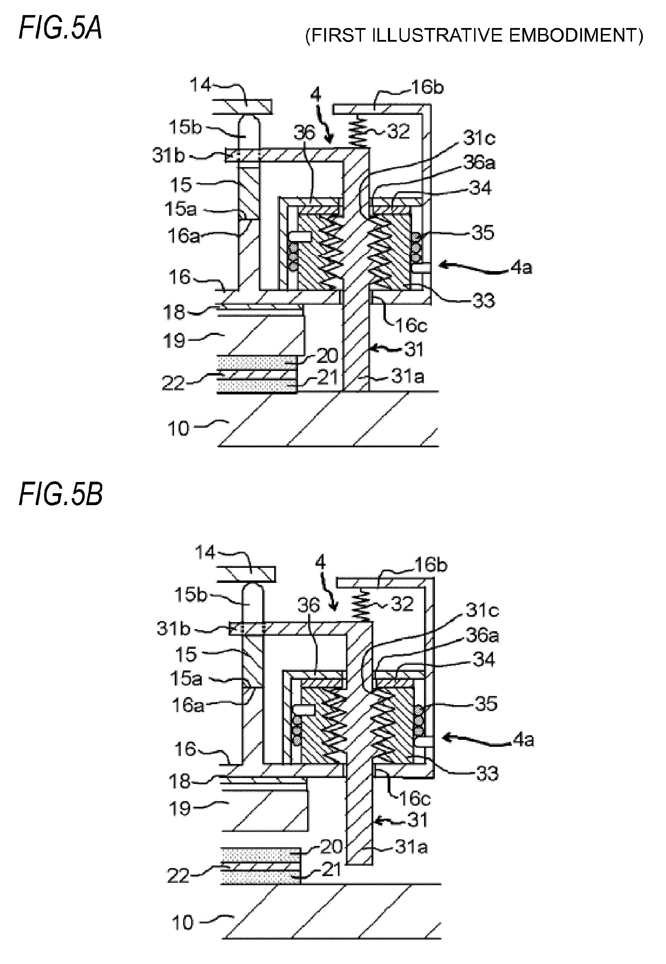

Subsequently, an operation (wear compensating operation) of the clutch device according to the first illustrative embodiment of the invention is described with reference to the drawings. Figs. 4A and 4B are partially sectional views schematically showing an operation of the clutch device according to the first illustrative embodiment of the invention, in which Fig. 4A shows a state before the friction member of the clutch disc is worn, and Fig. 4B shows a moment at which the friction member of the clutch disc is worn. Figs. 5A and 5B are partially sectional views following Figs. 4A and 4B schematically showing an operation of the clutch device according to the first illustrative embodiment of the invention, in which Fig. 5A shows a state where a wear amount of the friction member of the clutch disc is stored and Fig. 5B shows a state where the wear is compensated based on the stored wear amount.

Referring to Fig. 4A, before the friction members 20, 21 of the clutch disc 2 (Fig. 2) are worn, the sensor member 31 is contacted to both the flywheel 10 and the upper wedge 15. That is, before the wear, the sensor member 31 is urged towards the flywheel 10 (the lower side in Fig. 4) by the urging member 32, so that the pin part 31a of the sensor member 31 is contacted to the flywheel 10, and the stopper part 31a of the sensor member 31 is contacted to the notched part 15b of the upper wedge 15. At this time, the upper wedge 15 and the sensor member 31 are contacted, so that the stopper part 31b of the sensor member 31 suppresses the movement of the upper wedge 15 relative to the lower wedge 16 towards the transmission-side (the upper side in Fig. 4), which is caused due to the elastic force of the elastic member 17 (Fig. 2), and the movement of the upper wedge 15 is thus restrained.

Referring to Fig. 4B, when the friction members 20, 21 of the clutch disc 2 (Fig. 2) are worn from the state of Fig. 4A, the lower wedge 16 is moved towards the flywheel 10 (the lower side in Fig. 4) through the release plate 14 and the upper wedge 15 by the urging force of the elastic member 13 (Fig. 2). However, since the pin part 31a of the sensor member 31 urged by the urging member 32 is contacted to the flywheel 10, the sensor member 31 itself is not moved towards the flywheel 10 (the lower side in Figs. 4A and 4B). As a result, the lower wedge 16 can be moved towards the flywheel 10 (the lower side in Figs. 4A and 4B), as the axial clearance of the part at which the male screw part 31c of the sensor member 31 and the female screw member 33 are screwed. At this time, an axial force of the female screw member 33 is opened and a reactive force of the female screw member 33 in the rotating direction becomes zero (0). Also, the contact between the stopper part 31b of the sensor member 31 and the notched part 15b of the upper wedge 15 disappears and the movement of the upper wedge 15 relative to the lower wedge 16 towards the transmission-side (the upper side in Fig. 4), which is caused due to the elastic force of the elastic member 17 (Fig. 2), is restrained only by the load from the release plate 14.

Referring to Fig. 5A, when storing the wear amounts of the friction members 20, 21 of the clutch disc 2 (Fig. 2) from the state of Fig. 4A, since the reactive force of the female screw member 33 in the rotating direction becomes zero at the state of Fig. 4B, the female screw member 33 is rotated and moved towards the flywheel 10 (the lower side in Figs. 5A and 5B) by the force from the rotating force generating member 35. When the female screw member 33 is contacted to a lower surface of the male screw part 31c of the sensor member 31 and the lower wedge 16, a reactive force to the rotation of the female screw member 33 is generated and the rotation of the female screw member 33 is thus stopped. Thereby, the wear amounts of the friction members 20, 21 of the clutch disc 2 (Fig. 2) are stored. In the meantime, the upper wedge 15 is restrained from being moved by the release plate 14, like the state of Fig. 4B.

Referring to Fig. 5B, at compensation of the wear based on the stored wear amounts of the friction members 20, 21, when the wear is stored at the state of Fig. 5A, even though the release plate 14 is lifted up towards the transmission-side (the upper side in Fig. 5) and the sensor member 31 is thus separated from the flywheel 10, the load of the urging member 32 is supported through the male screw part 31c of the sensor member 31 and the female screw member 33 by the lower wedge 16, so that the sensor member 31 does not return to the original state (the state of Fig. 4A). While the release plate 14 is lifted up towards the transmission-side (the upper side in Figs. 5A and 5B), the load from the release plate 14 is reduced. At this time, when the force of moving the upper wedge 15 towards the transmission-side (the upper side in Figs. 5A and 5B) by the elastic force of the elastic member 17 (Fig. 2) is larger than the load from the release plate 14, the upper wedge 15 is rotated and moved towards the transmission-side (the upper side in Figs. 5A and 5B) until it is contacted to the sensor member 31.

According to the first illustrative embodiment, since the number of parts configuring the wear amount detecting and storing mechanism 4 is small and it is not necessary to use a special material, it is possible to implement the wear amount detecting and storing function at low cost. Also, according to the first illustrative embodiment, since the movement of the upper wedge 15 relative to the lower wedge 16 towards the transmission-side (the upper side in Fig. 2) by the elastic force of the elastic member 17 is restrained by the urging force of the urging member 32 on the sensor member 31, the degree of design freedom is high, the indefinite element such as friction force is small and the high reliability can be thus secured. Also, according to the first illustrative embodiment, since the degree of design freedom of the elastic member 17 is high, it is possible to apply an urging force large enough to endure vibrations, thereby securing high vibration resistance. Furthermore, according to the first illustrative embodiment, even though the wear compensating mechanism 3 and the wear amount detecting and storing mechanism 4 are fixed due to the rust and the like, when the sliding member 34 is enabled to contact the upper surface of the female screw member 33 and the load from the elastic member 13 is applied, it is possible to separate the fixed surface, so that a wear following function is not lost.

### [Second Illustrative Embodiment]

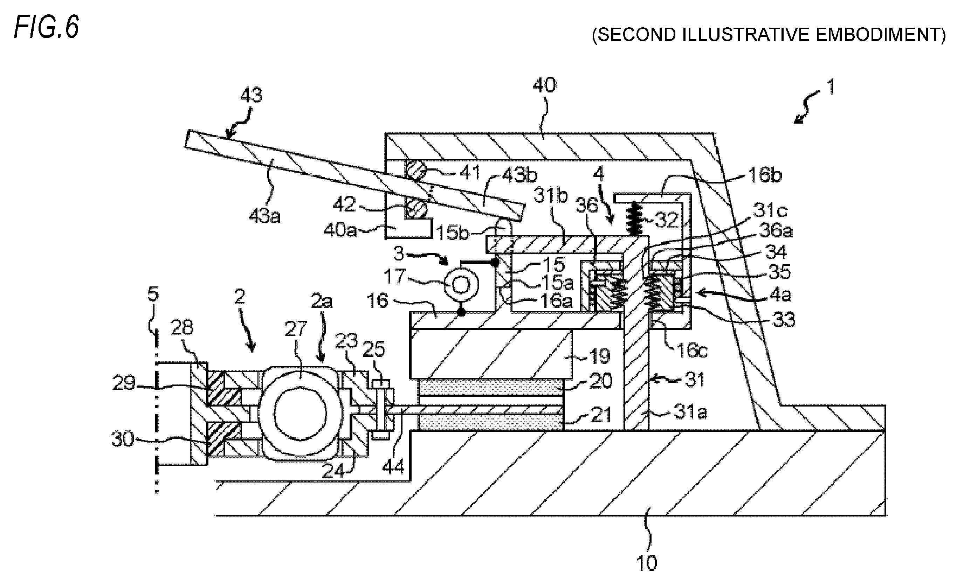

A clutch device according to a second illustrative embodiment of the invention is described with reference to the drawings. Fig. 6 is a sectional view schematically showing a configuration of the clutch device according to the second illustrative embodiment of the invention.

The second illustrative embodiment is a modified embodiment of the first illustrative embodiment. In the second illustrative embodiment, a clutch cover 40 of a lever type, a diaphragm spring 43 and support point members 41, 42 are used instead of the clutch cover 11 (Fig. 2), the elastic member 13 (Fig. 2) and the release plate 14 (Fig. 2). The cushion spring 18 (Fig. 2) is not used, and a seat spring 44 is used instead of the lining plate 22 (Fig. 2). The other configurations are the same as the first illustrative embodiment.

The clutch cover 40 is an annular member that is formed to cover the outer peripheral part of the clutch disc 2 (refer to Fig. 6). The clutch cover 40 is attached and fixed to the flywheel 10 at an outer peripheral part thereof by the bolts 12 (Fig. 1) and is rotated integrally with the flywheel 10. The clutch cover 40 is spaced from the flywheel 10 at an inner peripheral part thereof and covers the outer peripheral part of the clutch disc 2 and the pressure plate 19. The clutch cover 40 has, at an inner peripheral end portion, a crimping part 40a that supports two support point members 41, 42 arranged to sandwich both sides of a central part of the diaphragm spring 43. The crimping part 40a supports the two support point members 41, 42 by crimping the support point members at a plurality of empty parts between lever parts 43a of the diaphragm spring 43. The crimping part 40a swingably supports the diaphragm spring 43 at the support point members 41, 42 serving as support points.

The diaphragm spring 43 is an elastic member that has the lever parts 43a extending diametrically inwards from an annular disc spring part 43b, and is a configuration part of the pressing load adjusting mechanism (refer to Fig. 6). The diaphragm spring 43 is swingably sandwiched at a central part thereof between the two support point members 41, 42 supported to the crimping part 40a of the clutch cover 40. The diaphragm spring 43 is a lever member having the support point members 41, 42 as the support points. The diaphragm spring 43 abuts on the upper wedge 15 to be connected/separated on a surface of the engine-side (the lower side in Fig. 6) of an outer peripheral part of the disc spring part 43b. The diaphragm spring 43 abuts on a release bearing (not shown) on a surface of the transmission-side (the upper side in Fig. 6) of an inner peripheral part of the lever part 43a. The diaphragm spring 43 is tilted at the support point members 41, 42 serving as the support points, so that the disc spring part 43b urges the pressure plate 19 towards the flywheel 10 through the upper wedge 15 and the lower wedge 16, and the lever parts 43a urge the release bearing (not shown) towards the transmission-side (the upper side in Fig. 6). The diaphragm spring 43 urges the pressure plate 19 through the upper wedge 15 and the lower wedge 16 to thereby press the parts of the friction members 20, 21 of the clutch disc 2 to the flywheel 10. The diaphragm spring 43 presses the lever parts 43a towards the flywheel 10 by the release bearing (not shown), so that the disc spring part 43b is separated and displaced from the flywheel 10 and the urged state of the pressure plate 19 to the flywheel 10 is released.

Each of the support point members 41, 42 is an annular member becoming a support point of the swinging of the lever part 43a of the diaphragm spring 43 and is a configuration part of the pressing load adjusting mechanism (refer to Fig. 6). The support point members 41, 42 are arranged at both sides of the central part of the diaphragm spring 43 and crimped and supported at empty parts between the lever parts 43a of the diaphragm spring 43 by the crimping part 40a of the clutch cover 40.

The seat spring 44 is an elastic member that is arranged between the friction members 20, 21 (refer to Fig. 6). When the seat spring 44 is sandwiched and compressed between the friction members 20, 21, it urges the friction member 20 to separate from the friction member 21. The seat spring 44 is sandwiched at an inner peripheral part between the side plates 23, 24 and is attached and fixed to the side plates 23, 24 by the rivets 25.

According to the second illustrative embodiment, the same effects as the first illustrative embodiment are obtained.

### [Third Illustrative Embodiment]

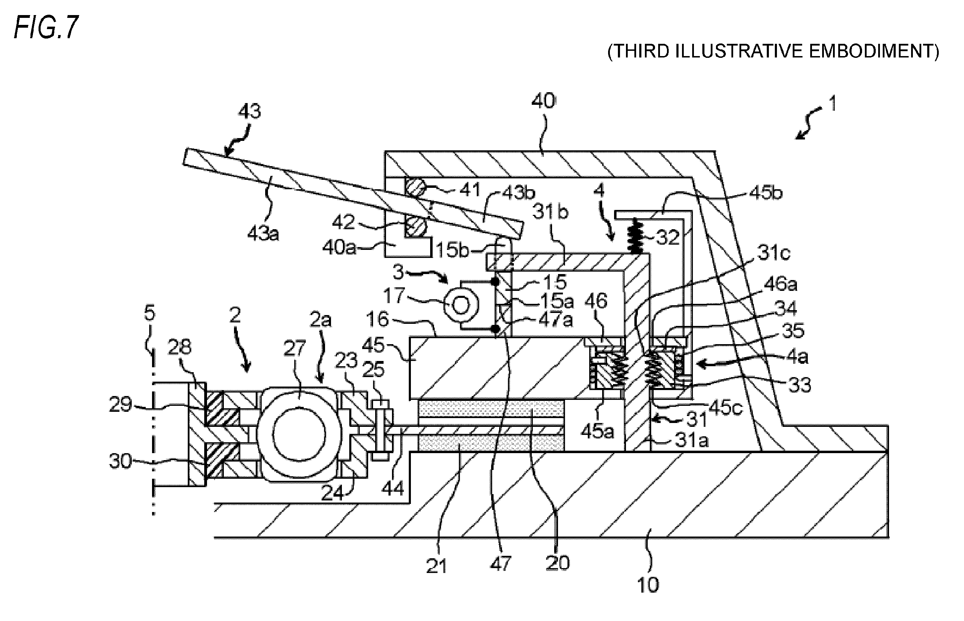

A clutch device according to a third illustrative embodiment of the invention is described with reference to the drawings. Fig. 7 is a sectional view schematically showing a configuration of the clutch device according to the third illustrative embodiment of the invention.

The third illustrative embodiment is a modified embodiment of the second illustrative embodiment. In the third illustrative embodiment, the wear amount detecting and storing mechanism 4 is provided to a pressure plate 45, not a lower wedge 47, and a cover member 46 is used instead of the case 36 (Fig. 6). The other configurations are the same as the second illustrative embodiment.

The pressure plate 45 is an annular plate that presses the friction sliding part of the clutch disc 2 to the flywheel 10, and is a configuration part of the wear amount detecting and storing mechanism 4 (refer to Fig. 7). The pressure plate 45 has a surface of the engine-side (the lower side in Fig. 7), which is a friction surface friction-sliding with the friction member 20 of the clutch disc 2. The pressure plate 45 has a surface of the transmission-side (the upper side in Fig. 2) that abuts on (or may be fixed or non-rotatably engaged to) the lower wedge 47. The pressure plate 45 is urged towards the flywheel 10 through the upper wedge 15 and the lower wedge 16 by the diaphragm spring 43. Also, the pressure plate 45 is urged towards the lower wedge 16 through the friction member 20 by the seat spring 44 when the seat spring 44 is axially compressed.

The pressure plate 45 has a recess portion 45a, a support part 45b and a hole portion 45c at a part functioning as the wear amount detecting and storing mechanism 4. The recess portion 45a is a part of the pressure plate 45, which is at the outer of the friction member 20 in the diametrical direction and is recessed from the transmission-side (the upper side in Fig. 7). In the recess portion 45a, the part of the sensor member 31, the female screw member 33, the sliding member 34 and the rotating force generating member 35 are accommodated. The recess portion 45a is mounted with the cover member 46 so as to cover the sliding member 34. The support part 45b protrudes from an outer peripheral part of the pressure plate 45 towards the transmission-side (the upper side in Fig. 7) and a tip end thereof protrudes diametrically inwards. The support part 45b supports one end of the urging member 32 that urges the sensor member 31 towards the engine-side (the lower side in Fig. 7). The hole portion 45c is a through-hole that is formed at a bottom part of the recess portion 45a of the pressure plate 45. The pin part 31a of the sensor member 31 is inserted into the hole portion 45c. The pressure plate 45 restrains the female screw member 33 from axially moving towards the flywheel 10 (the lower side in Fig. 7). The pressure plate 45 supports (or may fix or engage) the other end of the rotating force generating member 35 that generates the rotating force (the urging force in the rotating direction) of the female screw member 33.

The cover member 46 is a cover that covers the part of the sensor member 31, the female screw member 33, the sliding member 34 and the rotating force generating member 35 in the recess portion 45a of the pressure plate 45, and is a configuration part of the wear amount detecting and storing mechanism 4 (refer to Fig. 7). The cover member 46 is fixed to the recess portion 45a of the pressure plate 45. The cover member 46 has a hole portion 46a for inserting therein the pin part 31a of the sensor member 31. The cover member 46 restrains the female screw member 33 and the sliding member 34 from axially moving towards the transmission-side (the upper side in Fig. 7).

The lower wedge 47 is an annular member that is arranged between the upper wedge 15 and the pressure plate 45, and is a configuration part of the wear compensating mechanism 3 (refer to Fig. 7). The lower wedge 47 abuts on (or may be fixed or non-rotatably engaged to) the pressure plate 45 at an end face thereof at a side of the pressure plate 45.

The lower wedge 47 is formed with a plurality of inclined surfaces 47a at an end face thereof on a side of the upper wedge 15 (the upper side in Fig. 7) at a part functioning as the wear compensating mechanism 3. The inclined surface 47a is an inclined surface that changes in one axial direction accompanied by a change in one circumferential direction, and corresponds to the inclined surface 15a of the upper wedge 15. The inclined surface 47a is slidably engaged with the inclined surface 15a of the upper wedge 15. Thereby, when the upper wedge 15 is rotated in one circumferential direction with respect to the lower wedge 47, the upper wedge 15 can be displaced to separate from the lower wedge 47. The other end of the elastic member 17 is swingably connected to the lower wedge 47 and the lower wedge 47 is urged in the other circumferential direction by the elastic member 17.

According to the third illustrative embodiment, the same effects as the second illustrative embodiment are obtained.

### [Fourth Illustrative Embodiment]

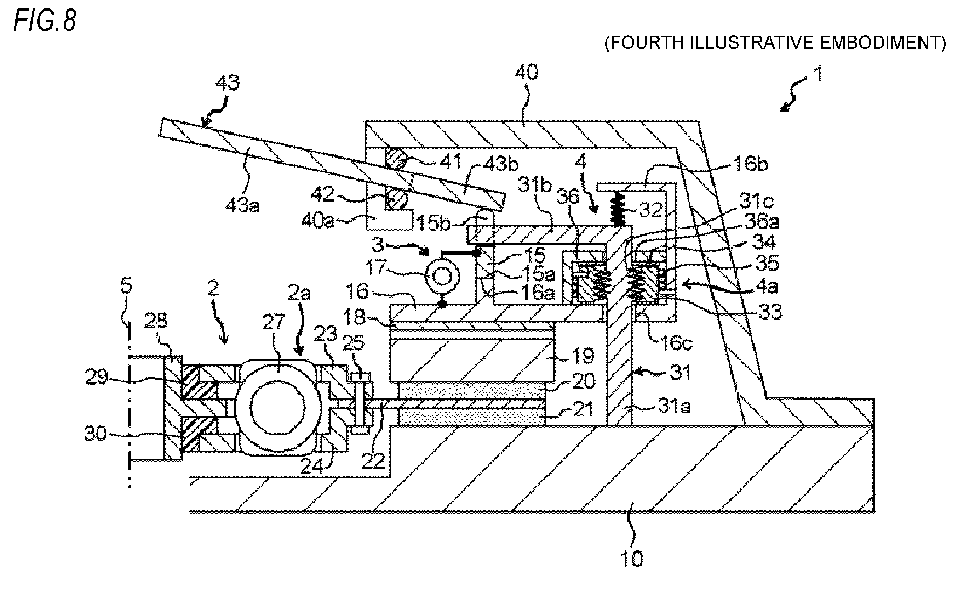

A clutch device according to a fourth illustrative embodiment of the invention is described with reference to the drawings. Fig. 8 is a sectional view schematically showing a configuration of the clutch device according to the fourth illustrative embodiment of the invention.

The fourth illustrative embodiment is a modified embodiment of the first illustrative embodiment. In the fourth illustrative embodiment, the clutch cover 40 of a lever type, the diaphragm spring 43 and the support point members 41, 42 are used instead of the clutch cover 11 (Fig. 2), the elastic member 13 (Fig. 2) and the release plate 14 (Fig. 2). The clutch cover 40, the diaphragm spring 43 and the support point members 41, 42 are the same as the second illustrative embodiment. The other configurations are the same as the first illustrative embodiment.

According to the fourth illustrative embodiment, the same effects as the first illustrative embodiment are obtained.

### [Fifth Illustrative Embodiment]

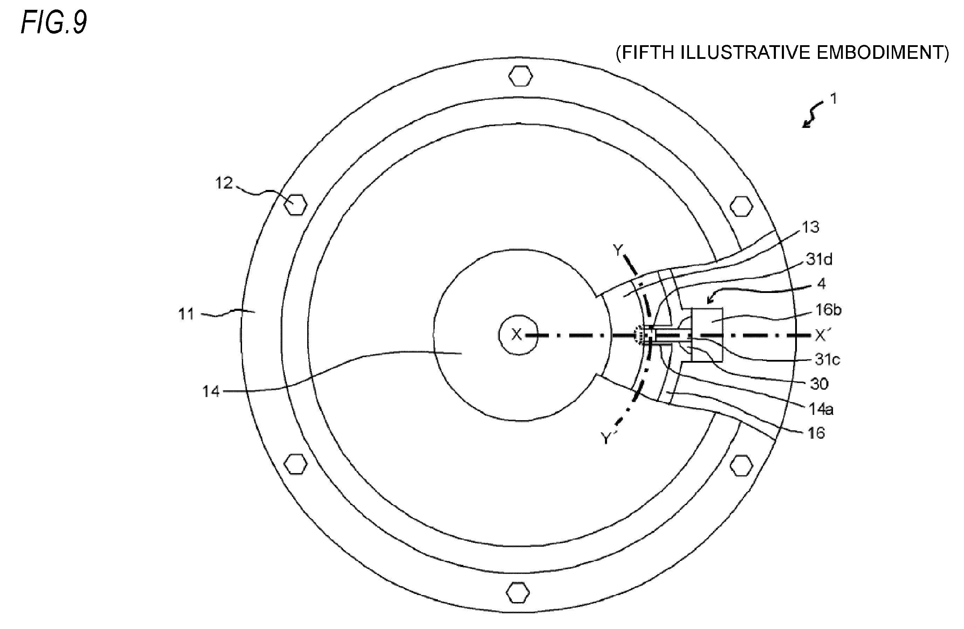

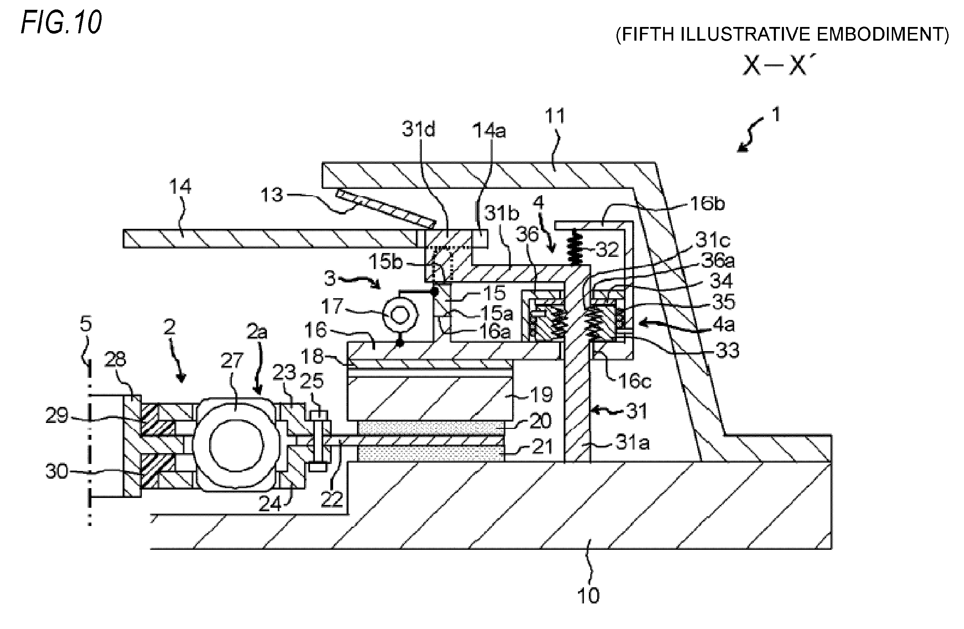

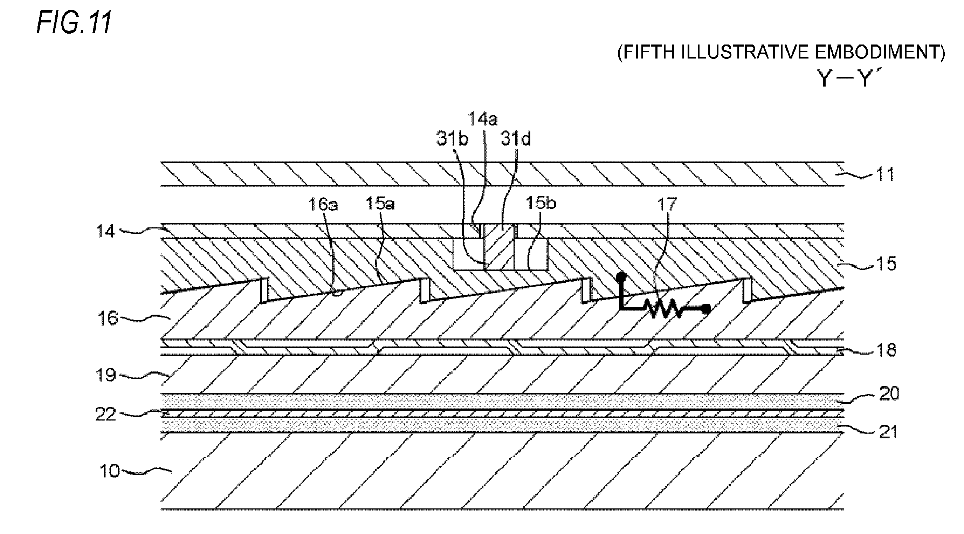

A clutch device of a fifth illustrative embodiment of the invention is described with reference to the drawings. Fig. 9 is a partially cut plan view schematically showing a configuration of the clutch device according to the fifth illustrative embodiment of the invention, which is seen from an axial direction. Fig. 10 is a sectional view taken along a line X-X' of Fig. 9, which schematically shows the configuration of the clutch device according to the fifth illustrative embodiment of the invention. Fig. 11 is a sectional view taken along a line Y-Y' of Fig. 9, which schematically shows the configuration of the clutch device according to the fifth illustrative embodiment of the invention. In the meantime, Fig. 10 shows a state before the friction member of the clutch disc is worn.

The fifth illustrative embodiment is a modified embodiment of the first illustrative embodiment. In the fifth illustrative embodiment, the release plate 14 is formed with a notched part 14a, the stopper part 31b of the sensor member 31 is formed with a protrusion 31d and the protrusion 31d is contacted to the elastic member 13 through the notched part 14a. The other configurations are the same as the first illustrative embodiment.

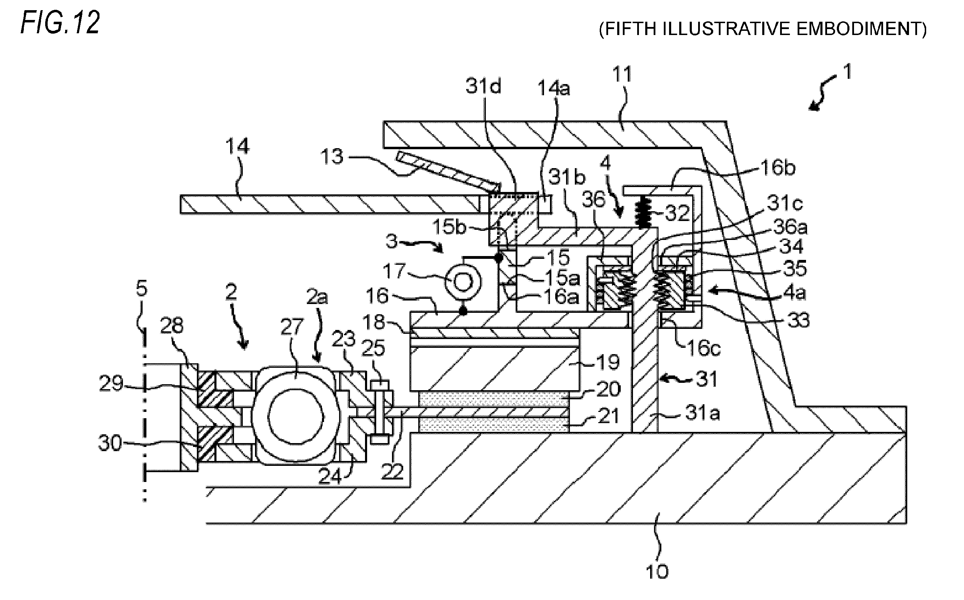

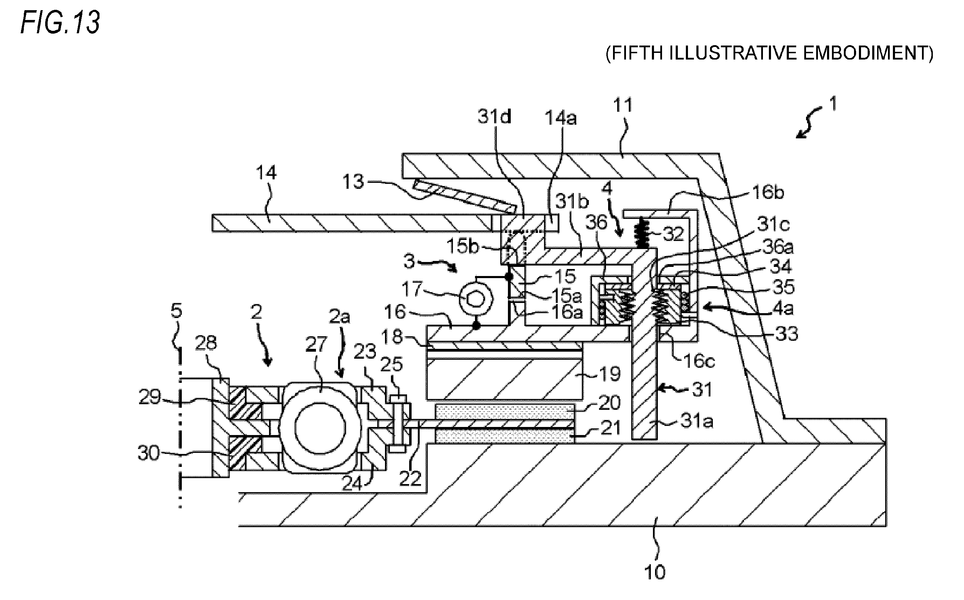

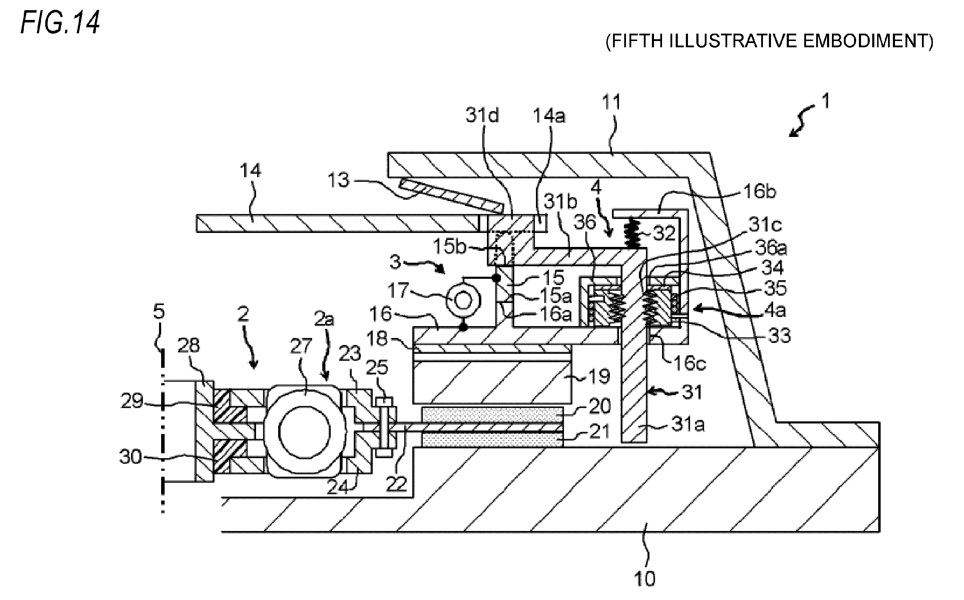

Subsequently, an operation (wear compensating operation) of the clutch device according to the fifth illustrative embodiment of the invention is described with reference to the drawings. Fig. 12 is a sectional view following Fig. 10 schematically showing an operation of the clutch device according to the fifth illustrative embodiment of the invention, which shows a moment at which the friction member of the clutch disc is worn. Fig. 13 is a sectional view following Fig. 12 schematically showing an operation of the clutch device according to the fifth illustrative embodiment of the invention, which shows a moment at which a release plate is lifted up. Fig. 14 is a sectional view following Fig. 13 schematically showing the operation of the clutch device according to the fifth illustrative embodiment of the invention, which shows a state where the wear is compensated based on the stored wear amount.

Referring to Fig. 10, before the friction members 20, 21 of the clutch disc 2 are worn, the sensor member 31 is contacted to both the flywheel 10 and the upper wedge 15. That is, before the wear, the sensor member 31 is urged towards the flywheel 10-side (the lower side in Fig. 10) by the urging member 32, so that the pin part 31a of the sensor member 31 is contacted to the flywheel 10 and the stopper part 31a of the sensor member 31 is contacted to the notched part 15b of the upper wedge 15. At this time, the upper wedge 15 and the sensor member 31 are contacted, so that the stopper part 31b of the sensor member 31 suppresses the movement of the upper wedge 15 relative to the lower wedge 16 towards the transmission-side (the upper side in Fig. 10), which is caused due to the elastic force of the elastic member 17, and the movement of the upper wedge 15 is thus restrained. Also, at this time, the protrusion 31d of the sensor member 31 and the release plate 14 are contacted to the elastic member 13 at the same height.

Referring to Fig. 12, when the friction members 20, 21 of the clutch disc 2 are worn from the state of Fig. 10, the lower wedge 16 is moved towards the flywheel 10-side (the lower side in Fig. 12) through the release plate 14 and the upper wedge 15 by the urging force of the elastic member 13. However, since the pin part 31a of the sensor member 31 urged by the urging member 32 is contacted to the flywheel 10, the sensor member 31 itself is not moved towards the flywheel 10 (the lower side in Fig. 12). As a result, the lower wedge 16 can be moved towards the flywheel 10 (the lower side in Fig. 12), as the axial clearance of the part at which the male screw part 31c of the sensor member 31 and the female screw member 33 are screwed. At this time, the axial force of the female screw member 33 is opened and the reactive force of the female screw member 33 in the rotating direction becomes zero (0). Also, the contact between the stopper part 31b of the sensor member 31 and the notched part 15b of the upper wedge 15 disappears and the movement of the upper wedge 15 relative to the lower wedge 16 towards the transmission-side (the upper side in Fig. 12), which is caused due to the elastic force of the elastic member 17, is restrained only by the load from the release plate 14. Also, at this time, a top surface of the protrusion 31d of the sensor member 31 is displaced towards the transmission-side (the upper side in Fig. 12) beyond the release plate 14 and the protrusion 31 d pushes up the elastic member 13 towards the transmission-side (the upper side in Fig. 12), thereby deforming a contact part of the elastic member 13 with the protrusion 31 d.

When storing the wear amounts of the friction members 20, 21 of the clutch disc 2 from the state of Fig. 12, since the reactive force of the female screw member 33 in the rotating direction becomes zero at the state of Fig. 12, the female screw member 33 is rotated and moved towards the flywheel 10 (the lower side in Fig. 12) by the force from the rotating force generating member 35. When the female screw member 33 is contacted to the lower surface of the male screw part 31c of the sensor member 31 and the lower wedge 16, a reactive force to the rotation of the female screw member 33 is generated and the rotation of the female screw member 33 is thus stopped. Thereby, the wear amounts of the friction members 20, 21 of the clutch disc 2 are stored.

Referring to Fig. 13, when the release plate 14 is lifted up towards the transmission-side (the upper side in Fig. 13) from the moment at which the wear amounts of the friction members 20, 21 of the clutch disc 2 are stored, the protrusion 31d of the sensor member 31 is pressed towards the flywheel 10 (the lower side in Fig. 13) by the large load of the elastic member 13, so that the upper wedge 15 and the lower wedge 16 are axially separated. At this time, even when the release plate 14 is lifted up towards the transmission-side (the upper side in Fig. 13) and the sensor member 31 is thus separated from the flywheel 10, the load of the urging member 32 is supported through the male screw part 31c of the sensor member 31 and the female screw member 33 by the lower wedge 16, so that the sensor member 31 does not return to the original state (the state of Fig. 10).

Referring to Fig. 14, when compensating for the wear based on the stored wear amounts of the friction members 20, 21, the upper wedge 15 is rotated relative to the lower wedge 16 from the state where the upper wedge 15 and the lower wedge 16 are axially separated, as shown in Fig. 13, until the upper wedge 15 and the lower wedge 16 are contacted to each other at the inclined surfaces 15a, 16a.

According to the fifth illustrative embodiment, the same effects as the first illustrative embodiment are obtained. Also, upon the wear, the sensor member 31 is lifted up, so that the sensor member 31 is contacted to the elastic member 13. Thereby, upon the lifting up, the elastic member 13 can push down the lower wedge 16 through the sensor member 31 and the female screw member 33, so that it is possible to easily form the gap between the upper wedge 15 and the lower wedge 16. Hence, the load necessary to move the upper wedge 15 is reduced, so that it is possible to reduce the urging force of the urging member 32, to make the urging member 32 small and to reduce the cost.

In the meantime, the illustrative embodiments can be changed and modified within the disclosure scope (including the claims and the drawings) and based on the basic technical spirit. Also, a variety of disclosure elements (including the respective elements of the claims, the respective elements of the respective illustrative embodiments, the respective elements of the respective drawings and the like) can be variously combined or selected within the claims of the invention. That is, the invention includes a variety of modifications and changes that can be implemented by one skilled in the art from all the disclosures and technical spirit including the claims and drawings.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch device comprising:
a pressure plate that presses a friction member of a clutch disc towards a flywheel;
a pressing load adjusting mechanism that adjusts a pressing load to the pressure plate by using a spring force;
a wear compensating mechanism that adjusts an interval between the pressure plate and the pressing load adjusting mechanism to compensate a wear amount of the friction member; and
a wear amount detecting and storing mechanism that detects and stores the wear amount of the friction member and allows an adjusting operation of the wear compensating mechanism based on the stored wear amount,
wherein the wear amount detecting and storing mechanism comprises:
a sensor member that can abut on one or both of the flywheel and the wear compensating mechanism from a side of the pressing load adjusting mechanism;
a female screw member that is screwed with the sensor member with a predetermined clearance in an axial direction and is restrained from being moved in the axial direction by a member moving integrally with the pressure plate;
an urging member that urges the sensor member towards the flywheel; and
a rotating force generating member that generates a rotating force to move the female screw member towards the flywheel.

2. The clutch device as claimed in claim 1, further comprising:
a clutch cover that is fixed to the flywheel,
wherein the pressing load adjusting mechanism comprises:
a release plate that can press the wear compensating mechanism towards the flywheel, and
an elastic member that is supported to the clutch cover and urges the release plate towards the wear compensating mechanism.

3. The clutch device as claimed in claim 2,
wherein the sensor member comprises a part that abuts on the elastic member.

4. The clutch device as claimed in claim 1, further comprising:
a clutch cover that is fixed to the flywheel,
wherein the pressing load adjusting mechanism comprises:
a diaphragm spring that comprises a plurality of lever parts extending diametrically inwards from an annular disc spring part and can urge the wear compensating mechanism towards the flywheel by the disc spring part; and
a support point member that is supported to the clutch cover and becomes a support point of swinging of the lever parts of the diaphragm spring.

5. The clutch device as claimed in one of claims 1 to 4,
wherein the wear compensating mechanism comprises:
a lower wedge that comprises a plurality of inclined surfaces at a side of the pressing load adjusting mechanism;
an upper wedge that comprises another plurality of inclined surfaces corresponding to the plurality of inclined surfaces at a side of the lower wedge and is movable in the axial direction as the upper wedge is rotated in a circumferential direction with respect to the lower wedge; and
an elastic member that urges the upper wedge in the circumferential direction with respect to the lower wedge.

6. The clutch device as claimed in claim 5,
wherein the lower wedge comprises a part functioning as the wear amount detecting and storing mechanism, and the part functioning as the wear amount detecting and storing mechanism comprises a support part supporting the urging member, and a hole portion for inserting therein the sensor member,
the clutch device further comprising:
a case that comprises a hole portion for inserting therein the sensor member and is fixed to the lower wedge to cover a part of the sensor member, the female screw member, and the rotating force generating member,
wherein the rotating force generating member is supported to the lower wedge or the case.

7. The clutch device as claimed in one of claims 1 to 5,
wherein the pressure plate comprises a part functioning as the wear amount detecting and storing mechanism, and the part functioning as the wear amount detecting and storing mechanism comprises a support part supporting the urging member, a hole portion for inserting therein the sensor member, and a recess portion for accommodating therein a part of the sensor member, the female screw member and the rotating force generating member,
the clutch device further comprising:
a cover member that comprises a hole portion for inserting therein the sensor member and is fixed to the pressure plate to cover the recess portion,
wherein the rotating force generating member is supported to the pressure plate.

8. The clutch device as claimed in one of claims 1 to 7, further comprising:
a sliding member that is arranged at a periphery of the sensor member and adjacent to the female screw member at one side or both sides in the axial direction.

9. The clutch device as claimed in one of claims 1 to 8,
wherein the clutch disc comprises a seat spring in the friction member.

10. The clutch device as claimed in one of claims 1 to 8, further comprising:
a cushion spring that is arranged between the wear compensating mechanism and the pressure plate.
